# EUROPÄISCHE PATENTSCHRIFT

(11) **EP 3 700 804 B1**
(45) Veröffentlichungstag und Bekanntmachung des Hinweises auf die Patenterteilung: **27.04.2022**
(21) Anmeldenummer: 18768808.0
(22) Anmeldetag: 03.09.2018
(51) Int. Cl.: B62D 15/02, B60W 30/06, G08G 1/14, G05D 1/02, G08G 1/0967

(54) **VERFAHREN ZUM DURCHFÜHREN EINES VOLLAUTOMATISCHEN FAHRVORGANGS EINES KRAFTFAHRZEUGS**
METHOD FOR CARRYING OUT FULLY AUTOMATIC DRIVING PROCESS OF A MOTOR VEHICLE
PROCÉDÉ POUR L'EXÉCUTION D'UNE OPÉRATION DE CONDUITE AUTOMATIQUE D'UN VÉHICULE À MOTEUR

(30) Priorität: 27.10.2017 DE 102017219389
(43) Veröffentlichungstag der Anmeldung: 02.09.2020
(73) Patentinhaber: Audi AG, 85045 Ingolstadt (DE)
(72) Erfinder: SCHULLER, Florian, 85737 Ismaning (DE)
(86) Internationale Anmeldenummer: PCT/EP2018/073583
(87) Internationale Veröffentlichungsnummer: WO 2019/081100

(56) Entgegenhaltungen:
- EP-A2- 2 698 293
- DE-A1-102015 217 384
- US-A1- 2010 250 023
- US-A1- 2014 222 247
- US-B1- 9 481 977

## Beschreibung

Die Erfindung betrifft ein Verfahren zum Durchführen eines vollautomatischen Fahrvorgangs eines Kraftfahrzeugs in einer mit einem Überwachungssystem ausgestalteten Umgebung sowie ein Kraftfahrzeug, das dazu ausgelegt ist, in Kommunikation mit dem Überwachungssystem einen vollautomatischen Fahrvorgang gemäß einem derartigen Verfahren durchzuführen.

Fahrzeugfunktionen zum automatisierten Führen eines Kraftfahrzeugs, wie sie zurzeit in Kraftfahrzeugen eingebaut werden, können anhand von digitalen Karten den Fahrweg des Kraftfahrzeugs innerhalb einer bestimmten Umgebung planen und sich in dieser Umgebung sensorgestützt kollisionsfrei bewegen. Darüber hinaus können solche autonom geführten Fahrzeuge über Car2X-Funktechnologie drahtlos mit fahrzeugexternen Überwachungseinrichtungen kommunizieren. Bei vollautomatischen Fahrfunktionen, bei denen sich nicht mehr zwangsweise ein Fahrer im Fahrzeuginneren aufhält, muss jedoch sichergestellt werden, dass sich das Kraftfahrzeug nur innerhalb von vorgegebenen, zuvor eindeutig definierten räumlichen Grenzen autonom bewegt. Im Falle eines nicht vorgesehenen Verlassens dieser geschützten Umgebung ist ein sofortiges Anhalten des Kraftfahrzeugs erforderlich.

Aus der DE 10 2014 221 751 A1 ist ein Verfahren zum autonomen Führen eines Kraftfahrzeugs auf einem Parkplatz bekannt. Bei diesem wird eine Route auf dem Parkplatz von einer Startposition zu einer Zielposition fahrzeugextern ermittelt, zumindest ein Teilstück der Route an das Kraftfahrzeug übermittelt und das Kraftfahrzeug beim autonomen Abfahren dieses zumindest einen Teilstücks der Route hinsichtlich Abweichungen von dem vorgegebenen Weg mit einem fahrzeugexternen Überwachungssystem überwacht. Aus der DE 10 2014 221 754 A1 ist zudem ein Verfahren zum Durchführen eines automatischen Parkvorgangs eines Kraftfahrzeugs bekannt, bei dem über ein Kommunikationsnetzwerk eine Reservierungsanfrage für eine Parkposition auf einem Parkplatz an einen Parkplatzverwaltungsserver gesendet wird. Über dieses Netzwerk werden Navigationsdaten für eine autonome Navigation zu der reservierten Parkposition übermittelt und das Kraftfahrzeug navigiert anschließend, basierend auf diesen Navigationsdaten, autonom zu der reservierten Parkposition. Der Fahr- und Einparkvorgang des Kraftfahrzeugs wird hierbei von dem Parkplatzverwaltungssystem mit einer internen Infrastruktur überwacht.

Des Weiteren wird in der DE 10 2015 208 053 A1 ein Verfahren zum Verringern der Gefährdung für ein und/oder durch ein sich auf einem Parkplatz befindendes Kraftfahrzeug vorgeschlagen. Bei diesem Verfahren wird eine Kommunikationsverbindung zwischen einem Kraftfahrzeug auf dem Parkplatz und einem Parkplatzverwaltungssystem während einer zumindest teilassistierten Fahrt auf einem Parkplatz überprüft. Bei einer gestörten oder fehlenden Kommunikationsverbindung werden mehrere Maßnahmen eingeleitet, um potentielle Gefährdungen für und/oder durch das Fahrzeug, die aus der gestörten oder fehlenden Kommunikation zwischen dem Kraftfahrzeug und dem Parkplatzverwaltungssystem resultieren, zu verringern. Das Dokument US98481977 B1, wird als nächstliegender Stand der Technik betrachtet und offenbart ein System gemäß dem Oberbegriff des Anspruchs 1.

Im Rahmen dieser Verfahren wird jedoch nicht sichergestellt, dass sich das Kraftfahrzeug auch im Falle von technischen Defekten oder bei ungewünschten externen Einwirkungen auf die Steuerungssoftware des Kraftfahrzeugs oder des entsprechenden Verwaltungssystems der Umgebung, wie beispielsweise durch einen entsprechenden Hackerangriff, ausschließlich innerhalb seiner definierten räumlichen Grenzen vollautonom bewegt.

Es ist daher Aufgabe der Erfindung, eine Möglichkeit bereitzustellen, mittels welcher ein besonders sicherer vollautomatischer Fahrvorgang eines Kraftfahrzeugs in einer mit einem Überwachungssystem ausgestatteten Umgebung ermöglicht werden kann.

Erfindungsgemäß wird diese Aufgabe durch ein Verfahren zum Durchführen eines vollautomatischen Fahrvorgangs eines Kraftfahrzeugs in einer mit einem Überwachungssystem ausgestatteten Umgebung gelöst, umfassend die Schritte: Verorten des Kraftfahrzeugs in der Umgebung, Überprüfen anhand der Vorortung, ob sich das Kraftfahrzeug in einem vorbestimmten Einsatzgebiet innerhalb der Umgebung befindet und falls sich das Kraftfahrzeug in dem vorbestimmten Einsatzgebiet befindet und eine Kommunikationsverbindung zwischen dem Kraftfahrzeug und dem Überwachungssystem besteht, wird ein Starten und Durchführen des vollautomatischen Fahrvorgangs ermöglicht. Bei dem erfindungsgemäß vorgeschlagenen Verfahren handelt es sich somit um ein Verfahren, mit dem ein automatisiertes Fahren eines Kraftfahrzeugs erfolgen kann. Dieses automatisierte Fahren findet in einem bestimmten abgegrenzten räumlichen Bereich statt, der mit einem Überwachungssystem ausgestattet ist, das den Ablauf des automatisierten Fahrens beobachtet und kontrolliert. Zunächst erfolgt eine Positionierung des Kraftfahrzeugs in dem bestimmten abgegrenzten räumlichen Bereich. Diese Positionierung kann durch das Überwachungssystem erfolgen. Es ist jedoch auch alternativ möglich, dass, falls zum Beispiel das Überwachungssystem keine dafür nötigen Sensoren und/oder Kamerasysteme aufweist, die Positionierung ausschließlich durch entsprechende Fahrzeugfunktionen des Kraftfahrzeugs erfolgt. Anhand der Positionierung wird kontrolliert, ob sich das Kraftfahrzeug in einem gewissen Teilbereich des räumlichen Bereichs befindet, in dem ein Einsatz der vollautomatischen Fahrfunktion des Kraftfahrzeugs mindestens den gesetzlichen Sicherheitsanforderungen an ein automatisiertes Fahren genügt und erlaubt ist.

Falls sich das Kraftfahrzeug in diesem gewissen Teilbereich des räumlichen Bereichs befindet und zusätzlich das Kraftfahrzeug und das Überwachungssystem über entsprechende fahrzeug- und überwachungssystemseitige Schnittstellen in Kontakt stehen, wird ermöglicht, dass das automatisierte Fahren des Kraftfahrzeugs beginnen und ausgeführt werden kann. Sobald die Kommunikationsverbindung zwischen dem Kraftfahrzeug und dem Überwachungssystem besteht und sichergestellt wurde, dass sich das Kraftfahrzeug innerhalb seines Einsatzgebiets befindet, wird also lediglich ein Starten und Durchführen des vollautomatischen Fahrvorgangs ermöglicht, jedoch nicht unmittelbar gestartet beziehungsweise ausgeführt.

Bei der Umgebung, die mit einem Überwachungssystem ausgestattet ist, handelt es sich um eine bestimmte Infrastruktur, beispielsweise um ein Bauwerk wie ein Parkhaus oder um einen bestimmten Straßenabschnitt. Befindet sich nun ein Kraftfahrzeug in der Nähe einer solchen Umgebung, beispielsweise in einem entsprechenden Parkhaus, kann eine zum automatisierten Fahren ausgelegte Fahrzeugfunktion eine Kommunikationsverbindung zu dem Überwachungssystem des Parkhauses aufbauen, wobei das Überwachungssystem Teil eines Verwaltungssystems des Parkhauses sein kann. Bei dieser Kommunikationsverbindung handelt es sich beispielsweise um eine Funkkommunikation per pWLAN oder LTE-V. Bevorzugt durch das Überwachungssystem des Parkhauses erfolgt dann eine Verortung des Kraftfahrzeugs im Parkhaus, zum Beispiel basierend auf den dem Überwachungssystem vorliegenden digitalisierten Karten des Parkhauses. Anhand der Daten dieser Absolutpositionierung des Kraftfahrzeugs wird vom Überwachungssystem überprüft, ob sich das Kraftfahrzeug in einem bestimmten Einsatzgebiet innerhalb des Parkhauses befindet. Bei diesem Einsatzgebiet kann es sich zum Beispiel um ein bestimmtes Parkdeck oder um einen für automatisiertes Fahren freigegebenen Bereich des Parkhauses handeln. Ist nun sichergestellt worden, dass sich das Kraftfahrzeug sowohl in dem vorbestimmten Einsatzgebiet innerhalb des Parkhauses befindet als auch die Kommunikationsverbindung zwischen dem Kraftfahrzeug und dem Überwachungssystem besteht, wird der zum vollautomatischen Fahren vorgesehenen Fahrzeugfunktion ein entsprechendes Signal übermittelt, sodass ab diesem Zeitpunkt ein Starten und Durchführen des vollautomatischen Fahrvorgangs ermöglicht ist, bei dem es sich zum Beispiel um einen vollautomatischen Einparkvorgang in dem Parkhaus handelt.

In weiterer vorteilhafter Ausgestaltung der Erfindung ist vorgesehen, dass, nachdem der vollautomatische Fahrvorgang ermöglicht wurde, dieser erst dann gestartet wird, wenn eine vorgegebene Benutzerhandlung erfasst worden ist. Das Kraftfahrzeug bewegt sich also erst dann vollautomatisch mit einer automatisierten Fahrfunktion, wenn eine bestimmte Aktivierungsaktion von einem Benutzer des Kraftfahrzeugs erfolgt ist. Bei dieser Benutzerhandlung, die auch als Nutzer-/Operatoranforderung bezeichnet werden kann, handelt es sich zum Beispiel um die Aktivierung einer entsprechenden Fahrzeugfunktion des Kraftfahrzeugs durch einen Knopfdruck im Fahrzeuginnenraum. Das Starten des automatisierten Fahrvorgangs ist also erst möglich, wenn zum einen sichergestellt wurde, dass sich das Kraftfahrzeug in dem vorbestimmten Einsatzgebiet befindet und eine Kommunikationsverbindung zwischen dem Kraftfahrzeug und dem Überwachungssystem besteht und zum anderen zusätzlich durch den Benutzer des Kraftfahrzeugs der vollautomatische Fahrvorgang aktiviert wurde. Dies stellt eine zusätzliche Absicherung der automatisierten Fahrfunktion dar, da im Falle eines Fehlers in der Steuerung oder bei externer Beeinflussung der vollautomatischen Fahrfunktion ein nicht autorisiertes Starten des Kraftfahrzeugs verhindert werden kann. Es kann dadurch verhindert werden, dass zum Beispiel durch einen Hackerangriff auf die Steuerung der zum vollautomatischen Fahren ausgelegten Fahrzeugfunktion, das Kraftfahrzeug unerwünscht und mit erhöhtem Sicherheitsrisiko vollautonom bewegt wird.

In einer weiteren Ausführungsform der Erfindung ist die Benutzerhandlung derart vorgesehen, dass sowohl eine für einen vollautonomen Fahrvorgang ausgelegte Fahrzeugfunktion im Fahrzeuginneren als auch eine Bestätigungseinheit außerhalb des Kraftfahrzeugs zu bedienen ist. Die vom Benutzer des Kraftfahrzeugs durchgeführte Aktivierungsaktion besteht somit aus zwei Schritten, von denen einer im Inneren des Kraftfahrzeugs ausgeführt wird und der andere erst erfolgt, nachdem das Kraftfahrzeug bereits vom Benutzer verlassen wurde. Bei der Benutzerhandlung im Fahrzeuginneren kann es sich zum Beispiel um das Betätigen eines Schalters einer Fahrzeugfunktion zum autonomen Führen eines Kraftfahrzeugs handeln. Diese Betätigung kann vom Benutzer selbst motiviert, oder als Reaktion auf eine entsprechende Anfrage durch einen Operator des Überwachungssystems der Umgebung erfolgen. Es ist alternativ möglich, dass die Betätigungsfunktion im Fahrzeuginneren durch eine von dem Operator beauftragte Person und nicht durch den Benutzer des Kraftfahrzeugs selbst erfolgt. Die entsprechende Anfrage an den Operator kann vom Benutzer ferngesteuert über die Kommunikationsverbindung erfolgen, beispielsweise mithilfe einer entsprechenden Smartphone-App. Zur Identifizierung und Authentifizierung dieser Anfrage kann beispielsweise fahrzeugseitig ein Security-Token verwendet werden.

Bei der außerhalb des Kraftfahrzeugs zu bedienenden Bestätigungseinheit kann es sich beispielsweise um eine ferngesteuerte Steuerung über eine App auf einem Smartphone handeln, auf deren Bedienoberfläche ein Knopf gedrückt werden muss, woraufhin der vollautomatische Fahrvorgang ausgelöst wird. Dies ermöglicht eine eindeutige, denn doppelt abgesicherte, Kontrolle durch den Benutzer des Kraftfahrzeugs über das Auslösen, aber auch das Durchführen, des automatisierten Fahrens.

In weiterer Ausgestaltung der Erfindung ist vorgesehen, dass das Starten des vollautomatischen Fahrvorgangs unterbunden wird, sobald die Kommunikationsverbindung abbricht. Wurde also zunächst eine Kommunikationsverbindung zwischen dem Kraftfahrzeug und dem Überwachungssystem der Umgebung des Kraftfahrzeugs aufgebaut und wurde überprüft, ob sich das Kraftfahrzeug in einem vorbestimmten Einsatzgebiet innerhalb der Umgebung befindet, wäre im Grunde das Starten eines vollautomatischen Fahrvorgangs möglich. Wird nun jedoch festgestellt, dass die Kommunikationsverbindung nicht mehr vorhanden ist, das heißt der Kontakt zwischen dem Kraftfahrzeug und dem Überwachungssystem der Umgebung abgebrochen ist, wird ein Starten des vollautomatischen Fahrvorgangs blockiert. Dies stellt einen zusätzlichen Sicherheitsmechanismus vor Beginn des automatisierten Fahrens des Kraftfahrzeugs dar. Alternativ ist es möglich, dass zusätzlich vor dem Starten des vollautomatischen Fahrvorgangs überprüft wird, ob das Kraftfahrzeug gewisse Bedingungen erfüllt, wie zum Beispiel ob alle Türen und Fenster geschlossen, ein vorbestimmter Reifendruck eingestellt ist oder vorbestimmte Zustände einzelner Fahrzeugsysteme, wie beispielsweise des Getriebes, erfüllt sind. Die Überprüfung dieser Bedingungen kann auch während des Durchführens des vollautomatischen Fahrvorgangs weiterhin erfolgen und als zusätzliches Kriterium für das Abbrechen des vollautomatischen Fahrvorgangs verwendet werden. Zudem kann vorgesehen sein, dass ein vollautomatischer Fahrvorgang nur dann ermöglicht wird, wenn das Kraftfahrzeug zunächst im Stillstand steht.

Eine weitere vorteilhafte Ausgestaltung der Erfindung sieht vor, dass der vollautomatische Fahrvorgang abgebrochen wird, falls sich das Kraftfahrzeug außerhalb des vorbestimmten Einsatzgebietes befindet und/oder die Verbindung mit dem Überwachungssystem abbricht. Hat das Kraftfahrzeug also das ihm vorbestimmte Einsatzgebiet verlassen und/oder ist der Kontakt zwischen dem Kraftfahrzeug und dem Überwachungssystem nicht mehr bestehend, wird ein weiteres Ausführen des automatisierten Fahrens unterbunden. In diesem Fall kann das Kraftfahrzeug zum Beispiel abrupt oder entlang einer bestimmten Route abgebremst und anschließend im Stillstand gehalten werden. Dies ermöglicht eine zusätzliche Absicherung des automatisierten Fahrens in einer mit einem Überwachungssystem ausgestatteten Umgebung.

Gemäß der Erfindung ist vorgesehen, dass ein für den vollautomatischen Fahrvorgang vorgesehener Fahrweg des Kraftfahrzeugs über die Kommunikationsverbindung an das Überwachungssystem übermittelt und vom Überwachungssystem hinsichtlich des vorbestimmten Einsatzgebietes überprüft wird, wobei das Starten oder das Durchführen des vollautomatischen Fahrvorgangs unterbunden oder abgebrochen wird, wenn zumindest ein Teil des vorgesehenen Fahrwegs außerhalb des vorbestimmten Einsatzgebiets liegt. Durch die von einer für automatisiertes Fahren ausgelegten Fahrzeugfunktion wird also die geplante Route des Kraftfahrzeugs an das Überwachungssystem übermittelt und von diesem bezogen auf das vorbestimmte Einsatzgebiet kontrolliert. Sollte nun zumindest ein Abschnitt dieser geplanten Route außerhalb des vorbestimmten Einsatzgebietes des Kraftfahrzeugs liegen, wird das Starten oder das Ausführen des vollautomatischen Fahrvorgangs verhindert oder gestoppt.

Befindet sich das Kraftfahrzeug zum Beispiel in einem Parkhaus, das mit einem entsprechenden Überwachungssystem ausgestattet ist, und stellt dieses Überwachungssystem fest, dass die von der entsprechenden Fahrzeugfunktion des Kraftfahrzeugs vorgesehene Route innerhalb des Parkhauses, das heißt die Route von einer bestimmten Startposition zu einer möglichen Parkposition, durch ein Teilgebiet des Parkhauses verläuft, das außerhalb des vorbestimmten Einsatzgebietes des Kraftfahrzeugs liegt, wird jeglicher vollautomatische Fahrvorgang unterbunden. Bei einem solchen Gebiet innerhalb des Parkhauses, das nicht innerhalb des vorbestimmten Einsatzgebiets liegt, kann es sich zum Beispiel um ein mit Glatteis bedecktes unüberdachtes Parkdeck handeln oder um eine aktuell gesperrte Etage des Parkhauses. Es ist somit möglich, dass ein vollautomatischer Fahrvorgang bereits vor seinem eigentlichen Starten daraufhin überprüft wird, ob die geplante Route des Kraftfahrzeugs innerhalb der Umgebung freigegeben werden kann und folglich sicher möglich ist.

Zudem kann auf plötzliche Änderungen des Einsatzgebietes durch das Überwachungssystem der Umgebung reagiert werden. Findet beispielsweise ein Unfall auf einem bestimmten Parkdeck des Parkhauses statt, kann dieses Parkdeck vom Überwachungssystem als außerhalb des vorbestimmten Einsatzgebiets liegend definiert werden, sodass eine bisher vorgesehene automatisierte Fahrt auf diesem Parkdeck verhindert wird.

Die Erfindung sieht vor, dass eine Orientierung und eine Positionierung des Kraftfahrzeugs in der Umgebung bestimmt, an das Überwachungssystem übermittelt und über das Überwachungssystem hinsichtlich des vorbestimmten Einsatzgebietes überprüft werden, wobei das Starten und das Durchführen des vollautomatischen Fahrvorgangs unterbunden oder abgebrochen wird, falls sich das Kraftfahrzeug in einem vorbestimmten Randgebiet des Einsatzgebietes befindet und aufgrund seiner Orientierung und Positionierung beim Starten oder Durchführen des vollautomatischen Fahrvorgangs das vorbestimmte Einsatzgebiet verlassen würde. Mit einer entsprechenden Fahrzeugfunktion wird also sowohl die Ausrichtung als auch der aktuelle Ort des Kraftfahrzeugs innerhalb der Umgebung ermittelt. Diese Daten werden an das Überwachungssystem über die vorhandene Kommunikationsverbindung gesendet und, falls sich das Kraftfahrzeug in einem bestimmten Außenbereich des Einsatzgebietes befindet, von diesem dahingehend kontrolliert, inwiefern sich das Kraftfahrzeug nach dem Starten oder beim Durchführen des vollautomatischen Fahrvorgangs innerhalb des vorgegebenen Einsatzgebietes aufhalten würde. Lässt sich dieser Fall aus den Orientierungs- und Positionierungsdaten des Kraftfahrzeugs ableiten, wird jegliches Starten oder Durchführen des automatisierten Fahrens verhindert beziehungsweise gestoppt. Befindet sich das Kraftfahrzeug zum Beispiel an dem Ort eines Parkhauses, an dem die Benutzer des Kraftfahrzeugs ein- und aussteigen können, das heißt an einer Position, die sich im Randgebiet des Einsatzgebietes befindet, und kann aufgrund der Orientierung des Kraftfahrzeugs darauf geschlossen werden, dass bei einem Starten der vollautomatischen Fahrfunktion das Kraftfahrzeug das vorbestimmte Einsatzgebiet verlassen könnte, wird also keine automatisierte Fahrt freigegeben. Dies ermöglicht eine zusätzliche Absicherung des vollautomatischen Fahrvorgangs, da sichergestellt werden kann, dass das Kraftfahrzeug nicht das ihm vorbestimmte Einsatzgebiet verlässt.

In weiterer vorteilhafter Ausgestaltung der Erfindung ist vorgesehen, dass die Bestimmung der Orientierung und der Positionierung des Kraftfahrzeugs durch entsprechende Fahrzeugfunktionen erfolgt und das Starten oder das Durchführen des vollautomatischen Fahrvorgangs unterbunden oder abgebrochen wird, falls die vom Überwachungssystem durch die Verortung bestimmte Position und/oder Orientierung des Kraftfahrzeugs von der von der entsprechenden Fahrzeugfunktion bestimmten Position und/oder Orientierung abweicht. Die Ausrichtung und der Ort, an dem sich das Kraftfahrzeug befindet, werden also von bestimmten Sensoreinheiten oder anderen dafür ausgelegten Komponenten des Kraftfahrzeugs bestimmt. Hierbei ist zum Beispiel eine Orientierung und Positionierung des Kraftfahrzeugs unter Berücksichtigung von sechs Freiheitsgraden, das heißt eine 6DoF-Positionierung (Six Degrees of Freedom-Positionierung), möglich. Die so bestimmte Position des Kraftfahrzeugs wird mit der Position abgeglichen, die durch die Verortung des Kraftfahrzeugs in der Umgebung von dem Überwachungssystem ermittelt wird. Weichen diese beiden Positionsdaten voneinander ab, wird ein Starten oder ein Ausführen eines automatisierten Fahrens des Kraftfahrzeugs verhindert oder gestoppt. Eine Abweichung der Positionsdaten des Kraftfahrzeugs und der Positionsdaten, die vom Überwachungssystem ermittelt wurden, deutet zum Beispiel darauf hin, dass ein Defekt in der entsprechenden Fahrzeugfunktion und/oder in dem Überwachungssystem vorhanden ist. Durch diese zusätzliche Abgleichung der Positionsdaten erfolgt somit eine weitere Absicherung des vollautomatischen Fahrvorgangs.

Zusätzlich oder alternativ dazu kann die vom Kraftfahrzeug bestimmte Orientierung des Kraftfahrzeugs mit der vom Überwachungssystem ermittelten Orientierung des Kraftfahrzeugs verglichen und hinsichtlich Abweichungen überprüft werden. Weichen diese beiden Orientierungsdaten voneinander ab, wird ein Starten oder ein Ausführen eines automatisierten Fahrens des Kraftfahrzeugs verhindert oder gestoppt. Abweichungen in den Orientierungsdaten deuten ebenfalls auf Defekte in der entsprechenden Fahrzeugfunktion und/oder im Überwachungssystem hin, so dass ein Abgleichen der Orientierungsdaten eine weitere Absicherung des vollautomatischen Fahrvorgangs ermöglicht.

In weiterer vorteilhafter Ausgestaltung der Erfindung ist vorgesehen, dass die Kommunikationsverbindung zwischen dem Kraftfahrzeug und dem Überwachungssystem abgesichert erfolgt. Die Kommunikation per Funktechnologie wie zum Beispiel pWLAN oder LTE-V findet daher verschlüsselt und über eine zertifizierte lokale Verbindung statt. Hierfür wäre zum Beispiel ein Drei-Wege-Handschlag-Verfahren zwischen dem Fahrzeug und dem Überwachungssystem der Umgebung oder eine Back-End-Verbindung mit dem Fahrzeughersteller oder einem Betreiber der Umgebung möglich, zum Beispiel einem Betreiber eines Parkhauses mit einem entsprechenden Überwachungssystem oder einer zentralen Verwaltungseinrichtung für mehrere entsprechende Parkhäuser. Die Kommunikation zwischen dem Kraftfahrzeug und dem Überwachungssystem ist somit so abgesichert, dass es nicht zu einer zufälligen Verbindung zwischen dem Kraftfahrzeug und dem Überwachungssystem kommen kann, zum Beispiel durch externe Beeinflussungen. Während die Kommunikationsverbindung besteht wird zudem weiterhin kontinuierlich überprüft, ob diese Verbindung zertifiziert ist. Im Falle einer Erneuerung der Kommunikationsverbindung nach einem Verbindungsabbruch wird die neu aufgebaute Verbindung ebenfalls hinsichtlich ihrer Verschlüsselung und Zertifizierung überprüft.

Erfindungsgemäß ist des Weiteren ein Kraftfahrzeug vorgesehen, dass dazu ausgelegt ist, in Kommunikation mit einem Überwachungssystem in einer vorbestimmten Umgebung einen vollautomatischen Fahrvorgang gemäß dem erfindungsgemäßen Verfahren oder gemäß einer vorteilhaften Ausführungsform des erfindungsgemäßen Verfahrens durchzuführen. Dieses Kraftfahrzeug ist somit in der Lage, ein automatisiertes Fahren nach den beschriebenen Ausführungsformen stattfinden zu lassen. Voraussetzung hierfür ist jedoch, dass zuvor eine Kommunikationsverbindung mit dem Überwachungssystem aufgebaut wurde. Das Überwachungssystem einer entsprechenden Umgebung muss also ebenfalls dazu ausgelegt sein, ein Verfahren nach den beschriebenen Ausführungsformen durchführen zu können. Sowohl das Kraftfahrzeug als auch das Überwachungssystem müssen somit entsprechende Kommunikationsschnittstellen sowie entsprechende Sensor- und Überwachungskomponenten aufweisen.

Im Folgenden sind Ausführungsbeispiele der Erfindung beschrieben. Hierzu zeigt:
- Fig. 1: eine schematische Darstellung eines mit einem Überwachungssystem ausgestatteten Parkhauses, in dem ein Kraftfahrzeug in einem vorgegebenen Einsatzgebiet vollautomatisch entlang eines Fahrwegs von einem Übergabebereich zu einem Zielbereich geführt wird;

- Fig. 2: eine schematische Darstellung des Parkhauses, in dem das Einsatzgebiet des Kraftfahrzeug aufgrund von Glatteis angepasst wurde;
- Fig. 3: eine schematische Darstellung des Parkhauses, in dem sich das Kraftfahrzeug in einem Randbereich des Einsatzgebietes befindet und aufgrund seiner Orientierung und Positionierung bei vollautomatischer Führung das Einsatzgebiet verlassen könnte;
- Fig. 4: eine schematische Darstellung von Verfahrensschritten zum Durchführen des vollautomatischen Fahrvorgangs des Kraftfahrzeugs in dem mit dem Überwachungssystem ausgestatteten Parkhaus.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

In den Figuren sind funktionsgleiche Elemente jeweils mit denselben Bezugszeichen versehen.

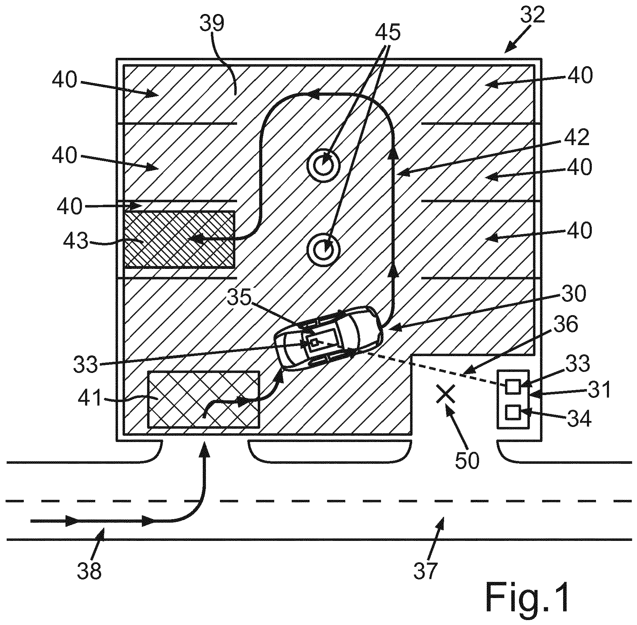

In Fig. 1 ist ein Parkhaus 32 mit einem Überwachungssystem 31 skizziert, in dem ein vollautomatischer Fahrvorgang eines Kraftfahrzeugs 30 stattfindet. Das Parkhaus 32 weist insgesamt sechs Parkplätzen 40 und zwei Säulen 45 auf und das Überwachungssystem 31 eine Kommunikationsschnittstelle 33 sowie eine Auswerteeinrichtung 34. Das Kraftfahrzeug 30 ist mit einer zum vollautomatischen Fahren ausgelegten Fahrzeugfunktion ausgestattet und eine entsprechende Steuereinrichtung 35 der Fahrzeugfunktion weist ebenfalls eine Kommunikationsschnittstelle 33 auf. Nähert sich das Kraftfahrzeug 30 dem Parkhaus 32 wird durch ein Auslösen der entsprechenden Fahrzeugfunktion eine Kommunikationsverbindung 36 zwischen den Kommunikationsschnittstellen 33 des Kraftfahrzeugs und des Überwachungssystems 31 des Parkhauses 32 aufgebaut. Dieser Verbindungsaufbau kann bereits in einer gewissen Entfernung zu dem Parkhaus 32 stattfinden. So kann, wenn ein Parken in dem Parkhaus 32 geplant ist, was zum Beispiel anhand entsprechender Einstellungen in einem Navigationssystem des Kraftfahrzeugs 30 eingestellt werden kann, der Aufbau der Kommunikationsverbindung 33 zwischen dem Kraftfahrzeug 30 und dem Überwachungssystem 31 bereits einige Zeit vor der Ankunft des Kraftfahrzeugs 30 am Parkhaus 32 stattfinden, beispielsweise während das Kraftfahrzeug 30 sich außerhalb des Parkhauses 32 auf einer Straße 37 befindet und entlang eines Anfahrtsweges 38 zum Parkhaus 32 fährt.

Sobald festgestellt wurde, dass die Kommunikationsverbindung 36 zwischen dem Kraftfahrzeug 30 und dem Überwachungssystem 31 besteht und das Kraftfahrzeug 30 das Parkhaus 32 erreicht hat, wird das Kraftfahrzeug 30 durch das Überwachungssystem 31 anhand digitaler Karten des Parkhauses 32 im Parkhaus 32 verortet. Anschließend überprüft das Überwachungssystem 31, ob sich das Kraftfahrzeug 30 innerhalb eines ihm vorbestimmten Einsatzgebiets 39 innerhalb des Parkhauses 32 befindet. Bei dem vorbestimmten Einsatzgebiet 39 handelt es sich zum Beispiel um bestimmte Parkdecks des Parkhauses 32, auf dem bestimmte Parkplätze 40 für vollautomatisch einparkende Kraftfahrzeuge 30 reserviert sind. Wird nun festgestellt, dass sich das Kraftfahrzeug 30 innerhalb dieses ihm vorbestimmten Einsatzgebietes 39 befindet und kann bestätigt werden, dass die Kommunikationsverbindung 36 weiterhin besteht, wird der vollautomatische Fahrvorgang ermöglicht.

Nun ist es möglich, dass der vollautomatische Fahrvorgang durch eine entsprechende Benutzerhandlung gestartet wird. Während eines daraufhin erfolgenden vollautomatischen Fahrvorgangs entlang eines Fahrwegs 42 zu einem Zielbereich 43 im Parkhaus 32 wird weiterhin überprüft, ob die Kommunikationsverbindung 36 zwischen dem Kraftfahrzeug 30 und dem Überwachungssystem 31 besteht und ob sich das Kraftfahrzeug 30 immer noch innerhalb des ihm vorbestimmten Einsatzgebietes 39 befindet. Bricht die Kommunikationsverbindung 36 ab, zum Beispiel durch Störungen der Funkverbindung oder durch sonstige technische Defekte, oder wird beobachtet, dass das Kraftfahrzeug 30 das ihm vorbestimmte Einsatzgebiet 39 verlässt, zum Beispiel durch eine fehlerhafte Ausführung des automatisierten Fahrens, wird der vollautomatische Fahrvorgang abgebrochen. Während des vollautomatischen Fahrvorgangs ist es jedoch auch möglich, dass die vollautomatische Fahrzeugfunktion regulär beendet wird, zum Beispiel durch eine entsprechende Benutzerhandlung oder auf Anweisung eines vom Benutzer angefragten Operators des Überwachungssystems 31 des Parkhauses 32.

Bei den Benutzerhandlungen, mit denen der vollautomatische Fahrvorgang gestartet und beendet wird, handelt es sich aus Sicherheitsgründen bevorzugt um doppelte Benutzerhandlungen. Diese doppelte Benutzerhandlung besteht aus einer Betätigung durch den Benutzer des Kraftfahrzeugs 30 innerhalb des Kraftfahrzeugs 30, zum Beispiel durch Drücken eines Knopfes an einer entsprechenden Fahrzeugkomponente, und zudem aus einer zweiten Benutzerhandlung außerhalb des Kraftfahrzeugs 30, die zum Beispiel durch das Drücken eines Knopfes auf einer entsprechenden zum Steuern eines vollautomatischen Fahrvorgangs eines Kraftfahrzeugs 30 vorgesehenen App eines Smartphones erfolgt. Die Übergabe der Steuerung des Kraftfahrzeugs 30 vom Benutzer an die für einen vollautomatischen Fahrvorgang ausgelegte Fahrzeugfunktion erfolgt in einem Übergabebereich 41, der sich für gewöhnlich am Eingang des Parkhauses 32 und somit am Rand des Einsatzgebietes 39 befindet. Der Benutzer stellt in diesem Übergabebereich 41 das Kraftfahrzeug 30 ab, aktiviert im Fahrzeuginneren die erste Benutzerhandlung, verlässt anschließend das Kraftfahrzeug 30 und startet den vollautomatischen Fahrvorgang entlang des Fahrwegs 42 zur Zielposition 43 des Kraftfahrzeugs 30 durch die entsprechende zweite Benutzerhandlung. Im Fall eines vollautomatischen Ausparkvorgangs des Kraftfahrzeugs 30 aus dem Zielbereich 43 nimmt der Benutzer das Kraftfahrzeug im Übergabebereich 41 wieder in Empfang.

Wird festgestellt, dass sich das Kraftfahrzeug 30 nicht im vorbestimmten Einsatzgebiet 39 befindet und/oder die Kommunikationsverbindung 36 zwischen den Kommunikationsschnittstellen 33 des Kraftfahrzeugs 30 und des Überwachungssystems 31 abgebrochen ist, wird der vollautomatische Fahrvorgang verhindert. Dieser Zustand ist zum Beispiel möglich, wenn das Kraftfahrzeug 30 von dem Nutzer außerhalb des Parkhauses 32 oder an einem nicht dafür freigegebenen Ort innerhalb des Parkhauses 32 abgestellt wurde, zum Beispiel an der mit einem Kreuz 50 markierten Stelle, oder wenn es zu Störungen in der Kommunikationsverbindung 36 zwischen dem Kraftfahrzeug 30 und dem Überwachungssystem 31 kommt, beziehungsweise Defekte in den entsprechenden Kommunikationsschnittstellen 33 auftreten. Kann die Kommunikationsverbindung 36 zwischen den entsprechenden Kommunikationsschnittstellen 33 jedoch wieder hergestellt werden und/oder befindet sich das Kraftfahrzeug 30 wieder innerhalb des Einsatzgebietes 39, zum Beispiel durch ein Umparken des Kraftfahrzeugs 30 durch den Fahrer, wird der vollautomatische Fahrvorgang wieder ermöglicht.

Bevor sich das Kraftfahrzeug 30 vollautomatisch im Parkhaus 32 bewegt, das heißt, wenn es sich noch im Übergabebereich 41 befindet, wird zunächst der Fahrweg 42 des Kraftfahrzeugs 32 vom Übergabebereich 41 am Eingang des Parkhauses 32 zum Zielbereich 43 bestimmt, bei dem es sich zum Beispiel um einen bestimmten Parkplatz 40 im Parkhaus 32 handelt. Für die Fahrwegbestimmung können außerdem von dem Überwachungssystem 31 bereitgestellte Daten zur Parkhausbelegung sowie zur Orientierung im Parkhaus 32 bereitgestellt werden, zum Beispiel digitale Karten. Sobald die Fahrwegbestimmung erfolgt ist, wird dieser über die Kommunikationsverbindung 36 an das Überwachungssystem 31 übermittelt. Anschließend überprüft die Auswerteeinrichtung 34, ob dieser Fahrweg 42 innerhalb des Einsatzgebietes 39 des Kraftfahrzeugs 30 verläuft. Wird nun festgestellt, dass der Fahrweg 42 innerhalb des Einsatzgebietes 39 verläuft, sich das Kraftfahrzeug 30 innerhalb des Einsatzgebietes 39 befindet und zudem die Kommunikationsverbindung 36 zwischen dem Kraftfahrzeug 30 und dem Überwachungssystem 31 vorhanden ist, wird der vollautomatische Fahrvorgang ermöglicht, gefolgt von den bereits beschriebenen Schritten.

Verläuft der Fahrweg 42 innerhalb des Einsatzgebiets 39, bricht jedoch die Kommunikationsverbindung 36 zwischen den Kommunikationsschnittstellen 33 des Kraftfahrzeugs 30 und des Überwachungssystems 31 ab und/oder wird festgestellt, dass sich das Kraftfahrzeug 30 außerhalb des Einsatzgebietes 39 befindet, kommt es zu einem Unterbinden des vollautomatischen Fahrvorgangs.

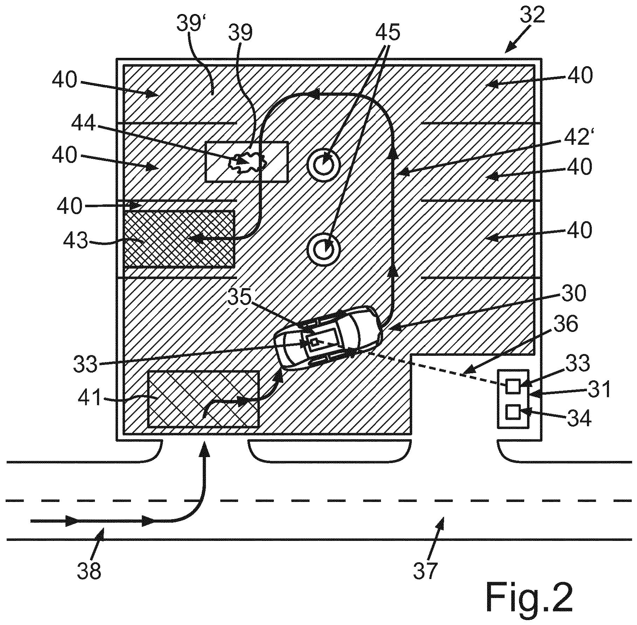

Wird während des vollautomatischen Fahrvorgangs festgestellt, dass der vorbestimmte Fahrweg 42 außerhalb des vorbestimmten Einsatzgebietes 39 verläuft, wird der vollautomatische Fahrvorgang ebenfalls abgebrochen. Diese Situation ist in Fig. 2 anhand des Fahrwegs 42' skizziert und wäre denkbar, wenn beispielsweise eine plötzliche Änderung des Einsatzgebietes 39 durch das Überwachungssystem 31 vorgenommen wird.

Dies kann erfolgen, wenn festgestellt wird, dass ein sicheres Fahren in einem bestimmten Bereich und/oder auf einem bestimmten Parkdeck des Parkhauses 32 nicht mehr möglich ist. Dies wäre zum Beispiel der Fall, wenn Glatteis 44 in einem Bereich auf einem nicht überdachten Parkdeck registriert wird oder sich die Lichtverhältnisse durch ausfallende Lampen auf einer Parkebene verschlechtern. Die für diese Einschätzung notwendigen Daten werden durch das Überwachungssystem 31 bereitgestellt, das permanent die Umgebungsbedingungen innerhalb der Umgebung, das heißt innerhalb des Parkhauses 32, überwacht. Hierzu können mit verschiedenen Sensoreinrichtungen oder Kameras Daten gewonnen werden, wie beispielsweise Daten über die Licht-Sichtverhältnisse innerhalb des Parkhauses 32, der Reibungswert auf dem Boden des Parkhauses 32 und/oder Temperaturdaten. Anhand der Reibungswerte können zum Beispiel glatte oder andere nicht sicher befahrbare Abschnitte des Parkhauses 32, beispielsweise aufgrund von Ölflecken auf dem Parkhausboden, identifiziert werden. Sollten dem Überwachungssystem 31 vorgegebenen Betriebsbedingungen, zum Beispiel eine bestimmte Mindesthelligkeit oder ein vorgegebener Reibungswertbereich, durch die herrschenden Umgebungsbedingungen nicht erfüllt sein, kann der betroffene Bereich der Umgebung als außerhalb des Einsatzgebietes 39 liegend definiert werden, das heißt ein verkleinertes Einsatzgebiet 39' ohne die betroffenen Bereiche der Umgebung definiert werden. Das Kraftfahrzeug 30 hat dann nur noch die Berechtigung dazu, in dem Einsatzgebiet 39' vollautomatisch zu fahren. Falls sich das Kraftfahrzeug 30 außerhalb des Einsatzgebiets 39' befindet, wird die vollautomatische Fahrfunktion sofort abgebrochen, das heißt dem Kraftfahrzeug 30 wird die Fahrberechtigung zum automatisierten Fahren entzogen.

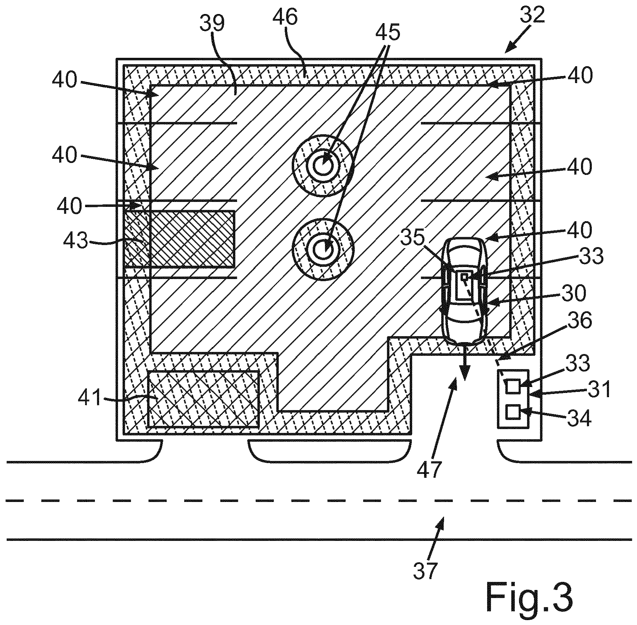

In Fig. 3 wird ein weiterer zusätzlicher Absicherungsschritt skizziert, für den eine Orientierung und eine Positionierung des Kraftfahrzeugs 30 durch kraftfahrzeugeigene Sensor- und Messeinheiten innerhalb des Parkhauses 32 berücksichtigt wird. Zunächst erfolgt eine Orientierungs- und Positionierungsbestimmung des Kraftfahrzeugs 30 durch entsprechende Fahrzeugkomponenten. Hierfür kann zum Beispiel mit einer entsprechenden Sensoreinrichtung die Eigenbewegung des Kraftfahrzeugs 30 erkannt werden. Zudem können mit Außenkameras des Kraftfahrzeugs 30 bestimmte Merkmale des Parkhauses 32 erfasst werden, zum Beispiel Säulen 45, Fahrbahnmarkierungen oder entsprechende, zur Orientierung an den Parkhauswänden angebrachte Landmarken, bei denen es sich beispielsweise um 2D-Barcodes handelt, so dass mithilfe der vom Überwachungssystem 31 hinterlegten digitalen Karte des Parkhauses 32 eine zusätzliche Positionierung und somit eine Verortung des Kraftfahrzeugs 30 in der Umgebung durch das Kraftfahrzeug 30 selbst möglich ist. Die digitale Karte des Parkhauses 32 muss dabei nicht zwingend vom Überwachungssystem 31 hinterlegt sein. Es ist auch möglich, dass der entsprechenden Fahrzeugfunktion des Kraftfahrzeugs 30 bereits eine digitale Karte des Parkhauses 32 vorliegt, die vom Überwachungssystem 31 lediglich hinsichtlich gewisser Merkmale, wie zum Beispiel gewisser Landmarken oder die Grenzen des Einsatzgebiets 39, überprüft wird. Dem Kraftfahrzeug 30 vorliegende digitale Karten werden somit vor deren Verwendung im Rahmen des vollautomatischen Fahrvorgangs von dem Überwachungssystem 31 kontrolliert und zertifiziert.

Die vom Kraftfahrzeug 30 bestimmten Orientierungs- und Positionierungsdaten werden im Folgenden über die Kommunikationsverbindung 36 an das Überwachungssystem 31 übermittelt. Daraufhin überprüft die Auswerteeinrichtung 34 des Überwachungssystems 31, inwiefern es möglich wäre, dass sich das Kraftfahrzeug 30, falls sich dieses in einem vorbestimmten Randbereich 46 des Einsatzgebiets 39 befindet, aufgrund seiner Orientierung und Positionierung im Rahmen des vollautomatischen Fahrvorgangs so fortbewegen könnte, dass es das vorbestimmte Einsatzgebiete 39 verlässt. Ein Kraftfahrzeug 30 mit einer solchen Orientierung und Positionierung im Randbereich 46 des Einsatzgebietes 39 ist in Fig. 3 skizziert, wobei die Orientierung des Kraftfahrzeugs 30 mit einem Pfeil 47 dargestellt ist.

Die Orientierungs- und Positionierungsbestimmung, die Übermittlung dieser Daten und die beschriebene Überprüfung der Orientierung und Positionierung des Kraftfahrzeugs 30 erfolgen kontinuierlich. Es werden also ständig Statusdaten von dem Kraftfahrzeug 30 an das Überwachungssystem 31 übermittelt, die neben der Orientierung und der Positionierung des Kraftfahrzeugs 30 auch noch weitere Daten, wie beispielsweise die Geschwindigkeit des Kraftfahrzeugs 30, beinhalten können. Befindet sich das Kraftfahrzeug 30 nun im Randbereich 46 des Einsatzgebietes 39, zum Beispiel in unmittelbarer Nähe des Übergabebereichs 41, an dem vorgesehen ist, dass dort der Benutzer des Kraftfahrzeugs 30 sicher ein- und aussteigen kann, wird nun, falls festgestellt werden sollte, dass es aufgrund der Orientierung des Kraftfahrzeugs 30 möglich ist, dass das Kraftfahrzeug 30 bei dem vollautomatischen Fahrvorgang den ihm vorgegebenen Einsatzbereich 39 verlässt, der vollautomatische Fahrvorgang unterbunden.

Zur Feststellung, ob der vollständige Fahrvorgang unterbunden werden soll, wird außerdem die Kommunikationsverbindung 36 zwischen Kraftfahrzeug 30 und Überwachungssystem 31 überprüft sowie sichergestellt, dass sich das Kraftfahrzeug 30 innerhalb des ihm vorbestimmten Einsatzgebietes 39 befindet. Auch während des vollautomatischen Fahrvorgangs wird, wenn sich das Kraftfahrzeug 30 innerhalb des vorbestimmten Randgebiets 46 des Einsatzgebietes 39 befindet, weiterhin überprüft, ob sich durch die Orientierung und Positionierung des Kraftfahrzeugs 30 mögliche Konflikte mit dem ihm vorgegebenen Einsatzgebiet 39 ergeben und gegebenenfalls der vollautomatische Fahrvorgang abgebrochen. Bei dem vorbestimmten Randgebiete 46 des Einsatzgebietes 39 handelt es sich typischerweise um einen relativ kleinen Bereich des Einsatzgebietes 39 unmittelbar an dessen Rand.

Zudem kann ein Positionsabgleich stattfinden, bei dem die bei der Orientierungs- und Positionsbestimmung ermittelten Positionsdaten des Kraftfahrzeugs 30 mit den entsprechenden Positionierungsdaten des Überwachungssystems 31 durch die Verortung verglichen werden. Falls Abweichungen zwischen den beiden Positionierungsdaten festgestellt werden, kann der vollautomatischen Fahrvorgang unterbunden oder abgebrochen werden. Eine solche Abweichung zwischen den beiden Positionierungsdaten deutet darauf hin, dass ein Defekt in einer entsprechenden Fahrzeugfunktion oder in einer entsprechenden Funktion des Überwachungssystems 31 besteht, sodass aus Sicherheitsgründen der vollautomatische Fahrvorgang unterbunden beziehungsweise abgebrochen wird.

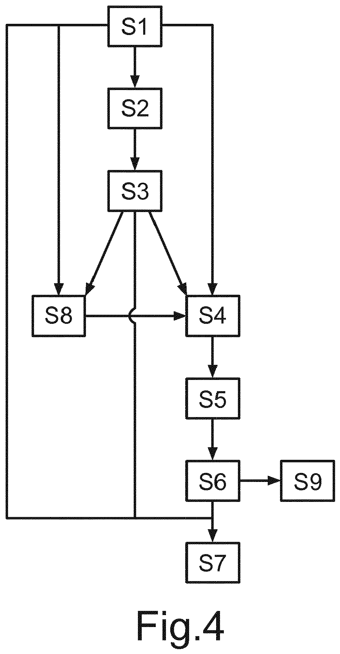

In Fig. 4 sind die einzelnen Verfahrensschritte zum Durchführen des vollautomatischen Fahrvorgangs des Kraftfahrzeugs 30 in dem mit einem Überwachungssystem 31 ausgestatteten Parkhaus 32 skizziert. Die in der Figur dargestellten Pfeile stellen übermittelte Daten oder Signale dar.

Sobald ein Bestehen S1 der Kommunikationsverbindung 36 zwischen dem Kraftfahrzeug 30 und dem Überwachungssystem 31 festgestellt wurde und das Kraftfahrzeug 30 das Parkhaus 32 erreicht hat, erfolgt eine Verortung S2 des Kraftfahrzeugs 30 im Parkhaus 32 durch das Überwachungssystem 31. Anschließend erfolgt ein Überprüfen S3 durch das Überwachungssystem 31, ob sich das Kraftfahrzeug 30 innerhalb des ihm vorbestimmten Einsatzgebiets 39 innerhalb des Parkhauses 32 befindet. Wird nun festgestellt, dass sich das Kraftfahrzeug 30 innerhalb des Einsatzgebietes 39 befindet und kann bestätigt werden, dass die Kommunikationsverbindung 36 weiterhin besteht, erfolgt ein Ermöglichen S4 des vollautomatischen Fahrvorgangs.

Von nun ab ist ein Starten S5 des vollautomatischen Fahrvorgangs durch eine entsprechende Benutzerhandlung möglich. Während eines daraufhin erfolgenden Durchführens S6 des vollautomatischen Fahrvorgangs wird weiterhin überprüft, ob die Kommunikationsverbindung 36 zwischen dem Kraftfahrzeug 30 und dem Überwachungssystem 31 besteht und ob sich das Kraftfahrzeug 30 immer noch innerhalb des ihm vorbestimmten Einsatzgebietes 39 befindet. Kommt es zu einem Abbruch der Kommunikationsverbindung 36 oder wird beobachtet, dass das Kraftfahrzeug 30 das ihm vorbestimmte Einsatzgebiet 39 verlässt kommt es zu einem Abbruch S7 des vollautomatischen Fahrvorgangs. Während des Durchführens S6 der vollautomatischen Fahrfunktion ist es jedoch auch möglich, dass ein reguläres Beenden S9 der vollautomatischen Fahrzeugfunktion stattfindet.

Wird beim Überprüfen S3, ob sich das Kraftfahrzeug 30 in einem vorbestimmten Einsatzgebiet 39 befindet, festgestellt, dass sich das Kraftfahrzeug 30 nicht innerhalb des Einsatzgebietes 39 befindet, und/oder wird an dieser Stelle bereits festgestellt, dass die Kommunikationsverbindung 36 zwischen den Kommunikationsschnittstellen 33 des Kraftfahrzeugs 30 und des Überwachungssystems 31 abgebrochen ist, kommt es zu einem Unterbinden S8 des Startens S5 des vollautomatischen Fahrvorgangs. Kann die Kommunikationsverbindung 36 zwischen den entsprechenden Kommunikationsschnittstellen 33 jedoch wieder hergestellt werden und/oder befindet sich das Kraftfahrzeug 30 wieder innerhalb des Einsatzgebietes 39, kann das Unterbinden S8 des Startens S5 des vollautomatischen Fahrvorgangs zurückgenommen werden und ein Ermöglichen S4 des vollautomatischen Fahrvorgangs erfolgen.

Insgesamt zeigen die Beispiele, wie durch die Erfindung ein sicheres Verfahren zum Durchführen eines vollautomatischen Fahrvorgangs eines Kraftfahrzeugs 30 in einem mit einem Überwachungssystem 31 ausgestatteten Parkhaus 32 möglich ist. Anstelle in einem Parkhaus 32 kann das Verfahren auch in einer anderen mit einem Überwachungssystem 31 ausgestatteten Umgebung angewendet werden, in der ein Kraftfahrzeug 30 vollautomatisch geführt werden soll, zum Beispiel auf einem entsprechenden Straßenabschnitt einer Schnellstraße.

## Patentansprüche

1. Verfahren zum Durchführen eines vollautomatischen Fahrvorgangs eines Kraftfahrzeugs (30) in einer mit einem Überwachungssystem (31) ausgestatteten Umgebung, umfassend die Schritte:
- Verorten (S2) des Kraftfahrzeugs (30) in der Umgebung,
- Überprüfen (S3) anhand der Vorortung (S2), ob sich das Kraftfahrzeug (30) in einem vorbestimmten Einsatzgebiet (39) innerhalb der Umgebung befindet,
- Falls sich das Kraftfahrzeug (30) in dem vorbestimmten Einsatzgebiet (39) befindet und eine Kommunikationsverbindung (36) zwischen dem Kraftfahrzeug (30) und dem Überwachungssystem (31) besteht, wird ein Starten (S5) und Durchführen (S6) des vollautomatischen Fahrvorgangs ermöglicht,
**gekennzeichnet dadurch, dass**
- ein für den vollautomatischen Fahrvorgang vorgesehener Fahrweg (42) des Kraftfahrzeugs (30) über die Kommunikationsverbindung (36) an das Überwachungssystem (31) übermittelt und vom Überwachungssystem (31) hinsichtlich des vorbestimmten Einsatzgebietes (39) überprüft wird, wobei das Starten (S5) oder das Durchführen (S6) des vollautomatischen Fahrvorgang unterbunden oder abgebrochen wird, wenn zumindest ein Teil des vorgesehenen Fahrwegs (42) außerhalb des vorbestimmten Einsatzgebiets (39) liegt, und/oder
- eine Orientierung und eine Positionierung des Kraftfahrzeugs (30) in der Umgebung bestimmt, an das Überwachungssystem (31) übermittelt und vom Überwachungssystem (31) hinsichtlich des vorbestimmten Einsatzgebietes (39) überprüft werden, wobei das Starten (S5) oder das Durchführen (S6) des vollautomatischen Fahrvorgangs unterbunden oder abgebrochen wird, falls sich das Kraftfahrzeug (30) in einem vorbestimmten Randgebiet (46) des Einsatzgebietes (39) befindet und aufgrund seiner Orientierung und Positionierung beim Starten (S5) oder Durchführen (S6) des vollautomatischen Fahrvorgangs das vorbestimmte Einsatzgebiet (39) verlassen würde.

2. Verfahren nach Anspruch 1, wobei nachdem der vollautomatische Fahrvorgang ermöglicht wurde, dieser erst dann gestartet wird, wenn eine vorgegebene Benutzerhandlung erfasst worden ist.

3. Verfahren nach Anspruch 2, wobei die Benutzerhandlung vorsieht, sowohl eine zum vollautonomen Fahrvorgang ausgelegte Fahrzeugfunktion im Fahrzeuginneren als auch eine Bestätigungseinheit außerhalb des Kraftfahrzeugs (30) zu bedienen.

4. Verfahren nach einem der vorhergehenden Ansprüche, wobei das Starten (S5) des vollautomatischen Fahrvorgangs unterbunden wird, sobald die Kommunikationsverbindung (36) abbricht.

5. Verfahren nach einem der vorhergehenden Ansprüche, wobei der vollautomatische Fahrvorgang abgebrochen wird, falls sich das Kraftfahrzeug (30) außerhalb des vorbestimmten Einsatzgebietes (39) befindet und/oder die Kommunikationsverbindung (36) mit dem Überwachungssystem (31) abbricht.

6. Verfahren nach einem der vorhergehenden Ansprüche, wobei die Orientierung und Positionierung des Kraftfahrzeugs (30) in der Umgebung bestimmt wird, wobei die Bestimmung der Orientierung und der Positionierung des Kraftfahrzeugs (30) durch entsprechende Fahrzeugfunktionen erfolgt und das Starten (S5) oder das Durchführen (S6) des vollautomatischen Fahrvorgangs unterbunden oder abgebrochen wird, falls die vom Überwachungssystem (31) durch die Verortung (S2) bestimmte Position und/oder Orientierung des Kraftfahrzeugs (30) von der von den entsprechenden Fahrzeugfunktionen bestimmten Position und/oder Orientierung abweicht.

7. Verfahren nach einem der vorhergehenden Ansprüche, wobei die Kommunikationsverbindung (36) zwischen dem Kraftfahrzeug (30) und dem Überwachungssystem (31) abgesichert erfolgt.

8. Kraftfahrzeug, das dazu ausgelegt ist, in Kommunikation mit einem Überwachungssystem (31) einen vollautomatischen Fahrvorgang gemäß einem Verfahren nach einem der Ansprüche 1-7 durchzuführen.

## Claims

1. Method for executing a fully automatic driving process of a vehicle (30) in an environment equipped with a monitoring system (31), comprising the steps of:
- locating (S2) the motor vehicle (30) in the environment,
- checking (S3), on the basis of the location (S2), whether the motor vehicle (30) is located in a predetermined area of operation (39) within the environment,
- if the motor vehicle (30) is located in the predetermined area of operation (39) and a communication link (36) between the motor vehicle (30) and the monitoring system (31) exists, starting (S5) and execution (S6) of the fully automatic driving process are enabled,
**characterised in that**
- a route (42) of the motor vehicle (30) intended for the fully automatic driving process is transmitted to the monitoring system (31) via the communication link (36) and is checked by the monitoring system (31) with regard to the predetermined area of operation (39), wherein the starting (S5) or the execution (S6) of the fully automatic driving process is prevented or interrupted if at least a portion of the intended route (42) lies outside the predetermined area of operation (39), and/or
- an orientation and a positioning of the motor vehicle (30) in the environment are determined, transmitted to the monitoring system (31) and checked by the monitoring system (31) with regard to the predetermined area of operation (39), wherein the starting (S5) or the execution (S6) of the fully automatic driving process is prevented or interrupted if the motor vehicle (30) is located in a predetermined peripheral area (46) of the area of operation (39) and would leave the predetermined area of operation (39) due to its orientation and positioning when starting (S5) or executing (S6) the fully automatic driving process.

2. Method according to claim 1, wherein, after the fully automatic driving process has been enabled, it is only started when a predetermined user action has been detected.

3. Method according to claim 2, wherein the user action provides for operating both a vehicle function designed for the fully autonomous driving process inside the vehicle and a confirmation unit outside the motor vehicle (30).

4. Method according to any of the preceding claims, wherein the fully automatic driving process is prevented from starting (S5) as soon as the communication link (36) is interrupted.

5. Method according to any of the preceding claims, wherein the fully automatic driving process is interrupted if the motor vehicle (30) is outside the predetermined area of operation (39) and/or the communication link (36) with the monitoring system (31) is interrupted.

6. Method according to any of the preceding claims, wherein the orientation and positioning of the motor vehicle (30) in the environment is determined, wherein the orientation and the positioning of the motor vehicle (30) are determined by corresponding vehicle functions and the starting (S5) or the execution (S6) of the fully automatic driving process is prevented or interrupted if the position and/or orientation of the motor vehicle (30) determined by the monitoring system (31) based on the location (S2) deviates from the position and/or orientation determined by the corresponding vehicle functions.

7. Method according to any of the preceding claims, wherein the communication link (36) between the motor vehicle (30) and the monitoring system (31) is secured.

8. Motor vehicle designed to execute, in communication with a monitoring system (31), a fully automatic driving process in accordance with a method according to any of claims 1-7.

## Revendications

1. Procédé permettant de mettre en œuvre une action de conduite entièrement automatique d'un véhicule à moteur (30) dans un environnement équipé d'un système de surveillance (31), comprenant les étapes consistant à :
- localiser (S2) le véhicule (30) au sein de l'environnement,
- vérifier (S3), à l'aide de la localisation (S2), si le véhicule (30) se trouve dans une zone d'utilisation (39) prédéterminée au sein de l'environnement,
- dans le cas où le véhicule (30) se trouve dans la zone d'utilisation (39) prédéterminée et où une liaison de communication (36) existe entre le véhicule (30) et le système de surveillance (31), un démarrage (S5) et une mise en œuvre (S6) de l'action de conduite complètement automatique est rendue possible,
**caractérisé en ce que**
- un trajet (42), prévu pour l'action de conduite complètement automatique, du véhicule à moteur (30) est déterminé au niveau du système de surveillance (31) par l'intermédiaire de la liaison de communication (36) et la zone d'utilisation (39) prédéterminée dudit trajet est vérifiée par le système de surveillance (31), dans lequel le démarrage (S5) ou la mise en œuvre (S6) de l'action de conduite complètement automatique est empêché(e) ou interrompu(e) lorsqu'au moins une partie du trajet (42) prévu est située à l'extérieur de la zone d'utilisation (39) prédéterminée, et/ou
- une orientation et un positionnement du véhicule à moteur (30) au sein de l'environnement sont déterminés, transmis au système de surveillance (31) et sa zone d'utilisation (39) prédéterminée est vérifiée par le système de surveillance (31), dans lequel le démarrage (S5) ou la mise en œuvre (S6) de l'action de conduite complètement automatique est empêché(e) ou interrompu(e) dans le cas où le véhicule à moteur (30) se trouve dans une zone marginale (46) prédéterminée de la zone d'utilisation (39) et où la zone d'utilisation (39) prédéterminée est quittée en raison de l'orientation et du positionnement dudit véhicule à moteur lors du démarrage (S5) ou de la mise en œuvre (S6) de l'action de conduite complètement automatique.

2. Procédé selon la revendication 1, dans lequel, après que l'action de conduite complètement automatique a été rendue possible, ladite action de conduite complètement automatique ne peut être initiée que lorsque qu'une manipulation d'utilisateur prédéfinie a été détectée.

3. Procédé selon la revendication 2, dans lequel la manipulation d'utilisateur prévoit de commander, à l'intérieur du véhicule, une fonction de véhicule conçue pour une action de conduite complètement automatique ou de commander une unité de confirmation à l'extérieur du véhicule à moteur (30).

4. Procédé selon l'une quelconque des revendications précédentes, dans lequel le démarrage (S5) de l'action de conduite complètement automatique est empêché dès que la liaison de communication (36) s'interrompt.

5. Procédé selon l'une quelconque des revendications précédentes, dans lequel l'action de conduite complètement automatique est interrompue dans le cas où le véhicule à moteur (30) se trouve à l'extérieur de la zone d'utilisation (39) prédéterminée et/ou où la liaison de communication (36) avec le système de surveillance (31) est interrompue.

6. Procédé selon l'une quelconque des revendications précédentes, dans lequel l'orientation et le positionnement du véhicule à moteur (30) au sein de l'environnement sont déterminés, dans lequel la détermination de l'orientation et du positionnement du véhicule à moteur (30) intervient grâce à des fonctions de véhicule correspondantes et le démarrage (S5) ou la mise en œuvre (S6) de l'action de conduite complètement indépendante est empêché(e) ou interrompu(e) dans le cas où la position et/ou l'orientation du véhicule à moteur (30), déterminée(s) grâce à la localisation (S2) par le système de surveillance (31), s'écarte(nt) de la position et/ou de l'orientation déterminée(s) par les fonctions de véhicule correspondantes.

7. Procédé selon l'une quelconque des revendications précédentes, dans lequel la liaison de communication (36) entre le véhicule à moteur (30) et le système de surveillance (31) intervient de manière sécurisée.

8. Véhicule à moteur, conçu pour mettre en œuvre, en communication avec un système de surveillance (31), une action de conduite complètement automatique conformément à un procédé selon l'une quelconque des revendications 1 à 7.
